# EUROPEAN PATENT APPLICATION

(11) **EP 4 477 714 A1**
(43) Date of publication of application: **18.12.2024**
(21) Application number: 23749537.9
(22) Date of filing: 19.01.2023
(51) Int. Cl.: C08L 91/06, B29C 45/17, B29C 45/26, B29C 45/47, B29C 45/78, C08G 59/20, C08L 63/00

(54) **RESIN COMPOSITION FOR INJECTION MOLDING AND METHOD FOR INJECTION-MOLDING THIS COMPOSITION**

(30) Priority: 07.02.2022 JP 2022017406
(71) Applicant: Sumitomo Bakelite Co.Ltd., Shinagawa-ku Tokyo 140-0002 (JP)
(72) Inventor: MOCHIZUKI Shunsuke, Tokyo 140-0002 (JP)
(74) Representative: Müller-Boré & Partner Patentanwälte PartG mbB
(86) International application number: PCT/JP2023/001546
(87) International publication number: WO 2023/149221

(57) **Abstract**

The resin composition for injection molding according to the embodiment of the present invention contains at least one kind of wax (a) having a melting point of lower than 80°C.

## Description

### TECHNICAL FIELD

The present invention relates to a resin composition for injection molding and a method for injection-molding this composition.

### BACKGROUND ART

The development of injection molding of semiconductor encapsulants is underway. Supplying encapsulants as is can be contemplated to improve productivity of the injection molding.

Patent Document 1 discloses an epoxy resin composition containing an epoxy resin, a phenol compound curing agent, a curing accelerator, and an inorganic filler as essential components. It is described in the same document that the epoxy resin composition may include wax.

Patent Document 2 discloses an epoxy resin material for injection molding that contains only polyfunctional epoxy resin, bifunctional epoxy resin, epoxy resin curing agent, curing accelerator, inorganic filler, silane coupling agent, and release agent, is solid at room temperature, and satisfies a predetermined physical property value. Carnauba wax is described as the release agent. It is described in the same document that the epoxy resin material for injection molding has excellent moldability.

### RELATED DOCUMENT

### PATENT DOCUMENT

[Patent Document 1] Japanese Unexamined Patent Publication No. H8-67741
[Patent Document 2] Japanese Unexamined Patent Publication No. 2013-127042

### SUMMARY OF THE INVENTION

### TECHNICAL PROBLEM

However, the resin compositions for injection molding described in Patent Documents 1 and 2 have room for improvement in moldability in that, during injection, a resin in a cylinder flows back into a hopper (hereinafter, also described as backflow) or is stuck to a screw or the like, resulting in preclusion of accurate weighing.

### SOLUTION TO PROBLEM

The present inventors have found that the above described issue can be solved by a resin composition containing a specific wax, and have completed the present invention. That is, the present invention can be described as follows.
[1] A resin composition for injection molding, containing:
   at least one kind of a wax (a) having a melting point of lower than 80°C.
[2] The resin composition for injection molding according to [1], in which the wax (a) includes a wax that has a melting point of equal to or lower than 65°C.
[3] The resin composition for injection molding according to [1] or [2], further containing:
   at least one kind of a wax (b) having a melting point equal to or higher than the melting point of the wax (a).
[4] The resin composition for injection molding according to any one of [1] to [3],
   in which the resin composition is used in an injection molding apparatus,
   the injection molding apparatus being provided with an injection unit composed of a cylinder and a screw that is inserted into the cylinder, and a mold that has a cavity with which a melted composition is filled from the injection unit,
   a temperature T of a tip end of the screw in the cylinder is 60°C to 100°C, and
   the wax includes a wax (b) that has a melting point of higher than the temperature T of the tip end of the screw and a wax (a) that has a melting point of lower than the temperature T of the tip end of the screw.
[5] The resin composition for injection molding according to [4], in which a temperature in the cavity is 150°C to 160°C.
[6] The resin composition for injection molding according to any one of [1] to [5], further containing:
   an epoxy resin that has a softening point of lower than 80°C, or a curing agent that has a softening point of lower than 80°C.
[7] An injection molding method using an injection molding apparatus provided with an injection unit composed of a cylinder and a screw that is inserted into the cylinder, and a mold that has a cavity, the method including:
   a step of melting the resin composition for injection molding according to any one of [1] to [6] in the cylinder; and
   a step of injecting the melted resin composition using the screw to fill the cavity.
[8] The injection molding method according to [7], in which a temperature T of a tip end of the screw in the cylinder is 60°C to 100°C.
[9] The injection molding method according to [7] or [8], in which a temperature in the cavity is 150°C to 160°C.

### ADVANTAGEOUS EFFECTS OF INVENTION

According to the present invention, it is possible to provide a resin composition for injection molding, which has excellent weighing accuracy while preventing backflow and has excellent moldability, and an injection molding method using this composition.

### BRIEF DESCRIPTION OF THE DRAWINGS

Fig. 1 is a schematic cross-sectional view illustrating an example of an injection molding apparatus according to the present embodiment.
Fig. 2 is a schematic cross-sectional view illustrating an example of an in-vehicle electronic control unit according to an embodiment.

### DESCRIPTION OF EMBODIMENTS

Hereinafter, an embodiment of the present invention will be described with reference to the drawings. In all drawings, components identical to those of the above embodiment are denoted by the same reference numerals, and description thereof will not be repeated as appropriate. In addition, for example, "1 to 10" represents from "equal to or more than 1" to "equal to or less than 10" unless otherwise specified.

A resin composition for injection molding according to the present embodiment contains a wax.

### [Wax]

A wax contained in the resin composition for injection molding according to the present embodiment includes at least one kind of a wax (a) having a melting point of lower than 80°C.

From the viewpoint of the effects of the present invention, the wax (a) having a melting point of lower than 80°C preferably includes a wax that has a melting point of equal to or lower than 65°C.

Examples of the wax (a) include stearic acid (a melting point of 59°C to 61°C).

In the present embodiment, from the viewpoint of the effect of the present invention, the wax (a) can be contained in an amount of preferably equal to or more than 0.01 parts by mass and equal to or less than 10 parts by mass, more preferably equal to or more than 0.02 parts by mass and equal to or less than 5 parts by mass, still more preferably equal to or more than 0.05 parts by mass and equal to or less than 1 part by mass, and particularly preferably equal to or more than 0.1 parts by mass and equal to or less than 0.5 parts by mass with respect to 100 parts by mass of the resin composition for injection molding.

In the present embodiment, the wax preferably further includes at least one kind of a wax (b) having a melting point equal to or higher than the melting point of the wax (a). The melting point of the wax (b) may be equal to or higher than 80°C, preferably equal to or higher than 80°C and equal to or lower than 140°C, more preferably equal to or higher than 80°C and equal to or lower than 100°C, and still more preferably equal to or higher than 80°C and equal to or lower than 90°C, higher than the melting point of the wax (a).

The wax (b) is contained together with the wax (a) to achieve the excellent weighing accuracy while achieving the prevention of backflow, and the releasability of a cured product from a mold after injection molding is more excellent.

Examples of the wax (b) include carnauba wax (a melting point of 80°C to 86°C), oxidized polyethylene wax (a melting point of 120°C to 125°C), and zinc stearate (a melting point of 120°C to 130°C), and one or two or more kinds thereof can be used.

In a case in which the wax (b) is contained, a weight ratio a:b of the wax (a) to the wax (b) can be preferably 10:90 to 90:10, more preferably 20:80 to 80:20, and still more preferably 30:70 to 70:30.

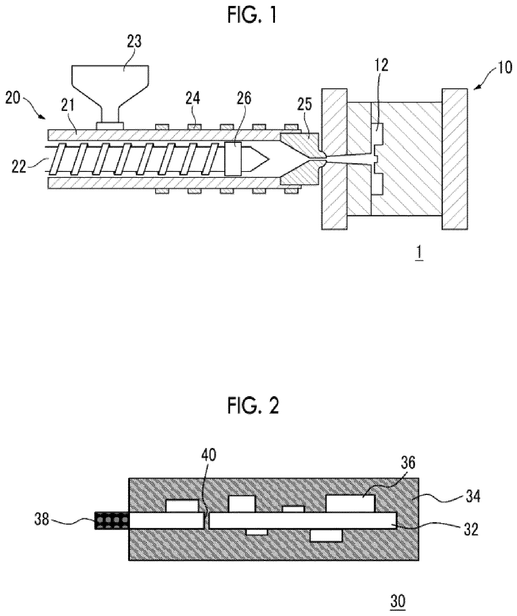

The resin composition for injection molding according to the present embodiment can be injection-molded using an injection molding apparatus 1 illustrated in Fig. 1. The injection molding apparatus 1 is provided with an injection unit 20 including a cylinder 21 and a screw 22 that is inserted into the cylinder 21, and a mold 10 having a cavity 12. Details of the injection molding apparatus 1 will be described later.

A temperature T of the tip end of the screw 22 in the cylinder 21 is 60°C to 100°C.

In the present embodiment, the wax includes the wax (b) having a melting point of higher than the temperature T of the screw tip end and equal to or higher than 80°C, and the wax (a) having a melting point of lower than the temperature T of the screw tip end and lower than 80°C. As a result, the excellent weighing accuracy is achieved while preventing the backflow, and the excellent releasability of a cured product made of the resin composition for injection molding from a mold is achieved, which enables continuous injection molding, leading to the excellent productivity.

### (Thermosetting Resin)

The resin composition for injection molding of the present embodiment can contain a thermosetting resin.

The thermosetting resin contains one or two or more kinds selected from the group consisting of, for example, an epoxy resin, a phenol resin, an oxetane resin, a (meth)acrylate resin, an unsaturated polyester resin, a diallyl phthalate resin, and a maleimide resin. Among these, from the viewpoint of improving curability, storage stability, heat resistance, moisture resistance, and chemical resistance, it is particularly preferable to contain an epoxy resin.

As the epoxy resin contained in the thermosetting resin, a monomer, an oligomer, or a polymer, which has two or more epoxy groups in one molecule, can be used in general, and a molecular weight and a molecular structure thereof are not particularly limited. In the present embodiment, the epoxy resin includes, for example, one or two or more kinds selected from the group consisting of biphenyl -type epoxy resins; biphenol -type epoxy resins such as a bisphenol A -type epoxy resin, a bisphenol F - type epoxy resin, and a tetramethylbisphenol F -type epoxy resin; stilbene -type epoxy resins; novolac -type epoxy resins such as a phenol novolac -type epoxy resin and an ortho-cresol novolac -type epoxy resin; polyfunctional epoxy resins such as a trisphenol - type epoxy resin exemplified as a triphenolmethane -type epoxy resin, an alkyl-modified triphenolmethane -type epoxy resin; phenol aralkyl -type epoxy resins such as a phenol aralkyl -type epoxy resin having a phenylene skeleton,a naphthol aralkyl-type epoxy resin having a phenylene skeleton, a phenol aralkyl-type epoxy resin having a biphenylene skeleton, and a naphthol-type aralkyl epoxy resin having a biphenylene skeleton; naphthol -type epoxy resins such as a dihydroxynaphthalene -type epoxy resin and an epoxy resin obtained by glycidyl etherification of dihydroxynaphthalene dimer; triazine nucleus-containing epoxy resins such as triglycidyl isocyanurate and monoallyl diglycidyl isocyanurate; bridged cyclic hydrocarbon compound-modified phenol-type epoxy resins such as a dicyclopentadiene-modified phenol - type epoxy resin.

Among these, from the viewpoint of the effect of the present invention, it is preferable to contain one or two or more kinds selected from an orthocresol novolac-type epoxy resin, a phenol novolac-type epoxy resin, and a bisphenol A-type epoxy resin.

It is also preferable that the epoxy resin contains a polyfunctional epoxy resin having three or more epoxy groups in a repeating structure of the epoxy resin skeleton. By using the polyfunctional epoxy resin, the glass transition temperature of the cured product can be improved.

The polyfunctional epoxy resin is not particularly limited, but examples thereof include a tetraphenylethane-type epoxy resin, 2-[4-(2,3-epoxypropoxy)phenyl]-2-[4-[1,1-bis[4-(2,3-epoxypropoxy)phenyl]ethyl]phenyl]propane, tetrakis(glycidyloxyphenyl)ethane, α-2,3-epoxypropoxyphenyl-ω-hydropol(n = 1 to 7){2-(2,3-epoxypropoxy)benziliden-2,3-epoxypropoxyphenylene}, and the like. These may be used alone, or a plurality thereof may be used in combination.

It is more preferable to include an epoxy resin having a softening point of lower than 80°C as the thermosetting resin. The epoxy resin having a softening point of lower than 80°C is used to obtain a resin composition for injection molding having a low viscosity, which enables continuous injection molding, leading to a more excellent productivity.

A content of the thermosetting resin in the resin composition for injection molding is preferably equal to or more than 2% by mass, more preferably equal to or more than 3% by mass, and particularly preferably equal to or more than 4% by mass, with respect to the total resin composition for injection molding. By setting the content of the thermosetting resin to equal to or more than the above described lower limit value, the fluidity during the molding can be improved. Therefore, the sealing resin composition for injection molding is more excellent in normal temperature storability, and furthermore, it is possible to improve the fillability and the molding stability. By contrast, the content of the thermosetting resin in the resin composition for injection molding is preferably equal to or less than 50% by mass, more preferably equal to or less than 30% by mass, and particularly preferably equal to or less than 15% by mass, with respect to the total resin composition for injection molding. By setting the content of the thermosetting resin to equal to or less than the above described upper limit value, it is possible to stabilize the heat treatment in an injection molding extruder and shorten the molding cycle.

### [Curing Agent]

The resin composition for injection molding of the present embodiment can contain a curing agent.

The curing agent can be roughly classified into three types, for example, a polyaddition-type curing agent, a catalytic-type curing agent, and a condensation-type curing agent.

Examples of the polyaddition-type curing agent used as the curing agent include one or two or more kinds selected from the group consisting of polyamine compounds including dicyandiamide (DICY), organic acid dihydrazide, and the like as well as aliphatic polyamines such as diethylenetriamine (DETA), triethylenetetramine (TETA), and meta-xylenediamine (MXDA), aromatic polyamines such as diaminodiphenylmethane (DDM), m-phenylenediamine (MPDA), and diaminodiphenylsulfone (DDS); acid anhydrides including alicyclic acid anhydrides such as hexahydrophthalic anhydride (HHPA) and methyltetrahydrophthalic anhydride (MTHPA), aromatic acid anhydrides such as trimellitic anhydride (TMA),pyromellitic anhydride (PMDA), and benzophenonetetracarboxylic acid (BTDA), and the like; phenol resin-based curing agents such as a novolac-type phenol resin, a polyvinylphenol, and an aralkyl-type phenol resin; polymercaptan compounds such as a polysulfide, a thioester, and a thioether; isocyanate compounds such as an isocyanate prepolymer and a blocked isocyanate; and organic acids such as a carboxylic acidcontaining polyester resin.

The catalytic-type curing agent used as the curing agent contains, for example, one or two or more kinds selected from the group consisting of tertiary amine compounds such as benzyldimethylamine (BDMA), 2,4,6-trisdimethylaminomethylphenol (DMP-30); and lewis acids such as BF3 complex.

The condensation-type curing agent used as the curing agent contains, for example, one or two or more kinds selected from the group consisting of a resol-type phenol resin; a urea resin such as a methylol group-containing urea resin; and a melamine resin such as a methylol group-containing melamine resin.

Among these, from the viewpoint of improving the balance between flame resistance, moisture resistance, electrical properties, curability, storage stability, and the like, the curing agent (B) more preferably contains a phenol resin-based curing agent. As the phenol resin-based curing agent, a monomer, an oligomer, or a polymer, which has two or more phenolic hydroxyl groups in one molecule, can be used in general, and a molecular weight and a molecular structure thereof are not particularly limited. The phenol resin-based curing agent used as the curing agent contains, for example, one or two or more kinds selected from the group consisting of novolac-type phenol resins such as phenol novolac resin, cresol novolac resin, and bisphenol novolac; polyvinylphenol; polyfunctional phenol resins such as a triphenol methane-type phenol resin; modified phenol resins such as a terpene-modified phenol resin and a dicyclopentadiene-modified phenol resin; phenolaralkyl-type phenol resins such as a phenolaralkyl resin with a phenylene skeleton and/or a biphenylene skeleton and a naphtholaralkyl resin with a phenylene and/or a biphenylene skeleton; and bisphenol compounds such as bisphenol A and bisphenol F. Among these, from the viewpoint of improving the curability of the resin composition for injection molding, it is more preferable to contain at least one of a novolac-type phenol resin or a phenolaralkyl-type phenol resin.

A content of the curing agent in the resin composition for injection molding is preferably equal to or more than 1% by mass, more preferably equal to or more than 2% by mass, and particularly preferably equal to or more than 3% by mass, with respect to the total resin composition for injection molding. By setting the content of the curing agent to equal to or more than the above described lower limit value, it is possible to be more excellent in normal temperature storability, achieve excellent fluidity during the molding, and improve the fillability and the moldability. By contrast, the content of the curing agent in the resin composition for injection molding is preferably equal to or less than 40% by mass, more preferably equal to or less than 25% by mass, and particularly preferably equal to or less than 10% by mass, with respect to the total resin composition for injection molding. By setting the content of the curing agent to equal to or less than the above described upper limit value, it is possible to stabilize the heat treatment in an injection molding extruder and shorten the molding cycle.

The resin composition for injection molding according to the present embodiment more preferably contains an epoxy resin having a softening point of lower than 80°C as the thermosetting resin, or a curing agent having a softening point of lower than 80°C as the curing agent, and more preferably both the epoxy resin and the curing agent have a softening point of lower than 80°C. The epoxy resin having a softening point of lower than 80°C and/or the curing agent having a softening point of lower than 80°C is used to obtain a resin composition for injection molding having a low viscosity, which enables continuous injection molding, leading to a more excellent productivity.

### [Inorganic Filler]

The resin composition for injection molding of the present embodiment can contain the inorganic filler.

The inorganic filler can contain, for example, one or two or more kinds selected from the group consisting of glass fiber, silica such as fused crushed silica, spherical silica, and crystalline silica, alumina, aluminum hydroxide, magnesium hydroxide, calcium carbonate, silicon nitride, and aluminum nitride. Among these, from the viewpoint of excellent general versatility, it is preferable to contain glass fiber, spherical silica, fused crushed silica, and calcium carbonate, and more preferable to contain spherical silica and fused crushed silica.

In a case where the inorganic filler contains silica, it is preferable to contain silica having an average particle diameter D₅₀ of equal to or more than 1 µm and equal to or less than 50 um, for example. Thus, it is possible to more effectively improve the balance between fillability, adhesiveness, moisture resistance, heat resistance, and the like. The average particle diameter D₅₀ of silica can be measured using, for example, a commercially available laser particle size distribution meter (for example, SALD-7000 manufactured by Shimadzu Corporation).

A content of the inorganic filler in the resin composition for injection molding is preferably equal to or more than 50% by weight, and more preferably equal to or more than 60% by weight, with respect to the total resin composition. By setting the content of the inorganic filler to equal to or more than the above described lower limit value, low hygroscopic property and low thermal expansion property are improved, so that the moisture resistance reliability of encapsulants can be more effectively improved. On the other hand, the content of the inorganic filler in the resin composition for injection molding is preferably equal to or less than 90% by weight, and more preferably equal to or less than 85% by weight, with respect to the total resin composition for injection molding. By setting the content of the inorganic filler to equal to or less than the above described upper limit value, it is possible to more effectively improve the fluidity and the fillability during the molding of the resin composition for injection molding.

### [Curing Accelerator]

The resin composition for injection molding of the present embodiment can contain a curing accelerator (curing catalyst). The curing accelerator may be any known one as long as the curing accelerator promotes a crosslinking reaction between the thermosetting resin and the curing agent.

Examples of the curing accelerator include imidazole, 2-undecylimidazole, 2-heptadecylimidazole, 1,2-dimethylimidazole, 2-ethyl-4-methylimidazole (EMI24), 2-phenylimidazole, 2-phenyl-4-methylimidazole (2P4MZ), 1-benzyl-2-phenylimidazole, 1-benzyl-2-methylimidazole, 1-cyanoethyl-2-methylimidazole,1-cyanoethyl-2-ethyl-4-methylimidazole, 1-cyanoethyl-2-undecylimidazole, 1-cyanoethyl-2-phenylimidazole, 1-cyanoethyl-2-undecylimidazolium trimellitate, 1-cyanoethyl-2-phenylimidazolium trimellitate, 2,4-diamino-6-[2'-methylimidazolyl(1')]-ethyl-s-triazine,2,4-diamino-6-[2'-undecylimidazolyl(1')]-ethyl-s-triazine, 2,4-diamino-6-[2'-ethyl-4-methylimidazolyl(1')]-ethyl-s-triazine, an Isocyanuric acid adduct of 2,4-diamino-6-[2'-methylimidazolyl(1')]-ethyl-s-triazine, an isocyanuric acid adduct of 2- phenylimidazole, an isocyanuric acid adduct of 2-methylimidazole,imidazole catalysts such as 2-phenyl-4,5-dihydroxydimethylimidazole, 2-phenyl-4-methyl-5-hydroxymethylimidazole, 2-phenyl-4,5-dihydroxymethylimidazole, and 2,4-diamino-6-[2-(2-methyl-1-imidazolyl)ethyl]-1,3,5-triazine;
urea-based catalysts such as 1,1'-(4-methyl-m-phenylene)bis(3,3-dimethylurea) and N, N'-dimethylurea; and the like. These may be used alone or may be used in combination of two or more kinds thereof.

Among these, from the viewpoint of improving the low-temperature curability and the fillability, it is preferable to contain one or more kinds selected from the group consisting of 2-phenyl-4,5-dihydroxymethylimidazole, 1,1'-(4-methyl-m-phenylene)bis(3,3-dimethylurea), and N, N'-dimethylurea.

In addition, from the viewpoint of the balance between the low-temperature curability and the fillability, the number of functional groups of the curing accelerator is, for example, preferably equal to or less than 3 and more preferably equal to or less than 2.

In the present embodiment, the lower limit value of a content of the curing accelerator is preferably, for example, equal to or more than 0.02% by mass, more preferably equal to or more than 0.05% by mass, and particularly preferably equal to or more than 0.1% by mass, with respect to the total solid content of the resin composition for injection molding. By setting the content of the curing accelerator to equal to or more than the above described lower limit value, the curability during the molding can be effectively improved. On the other hand, the upper limit value of the content of the curing accelerator is preferably, for example, equal to or less than 3.0% by mass, more preferably equal to or less than 2.0% by mass, still more preferably equal to or less than 1.0% by mass, and particularly preferably equal to or less than 0.5% by mass, with respect to the total solid content of the resin composition for injection molding. By setting the content of the curing accelerator to equal to or less than the above described upper limit value, the fluidity during the molding can be improved.

In addition, the lower limit value of the content of the curing accelerator is preferably, for example, equal to or more than 0.3% by mass, more preferably equal to or more than 0.5% by mass, and particularly preferably equal to or more than 0.8% by mass, with respect to the total solid content of the epoxy resin. By setting the content of the curing accelerator to equal to or more than the above described lower limit value, the curability at a low temperature during the molding can be effectively improved. By contrast, the upper limit value of the content of the curing accelerator is preferably, for example, equal to or less than 5.0% by mass, more preferably equal to or less than 3.0% by mass, and particularly preferably equal to or less than 2.0% by mass, with respect to the total solid content of the epoxy resin. By setting the content of the curing accelerator to equal to or less than the above described upper limit value, the fluidity during the molding can be improved.

### (Other Components)

The resin composition for injection molding of the present embodiment can be appropriately blended, as necessary, for example, with one or more kinds of various additives such as a silane coupling agent, a colorant, an ion scavenger, oil, a low stress agent, and a flame retarder.

### <Resin Composition for Injection Molding>

The resin composition for injection molding of the present embodiment can be obtained by mixing the above described components by a known method in the related art. The resin composition for injection molding according to the present embodiment is excellent in weighing accuracy while preventing the backflow into a hopper, thereby achieving the moldability.

The resin composition for injection molding according to the present embodiment can be subjected to low pressure molding at equal to or less than 40 MPa, and can be continuously molded at an injection rate of 10 mm/sec.

### <Injection Molding Method>

The injection molding method according to the present embodiment can be performed using the injection molding apparatus 1 illustrated in Fig. 1. The injection molding apparatus 1 is provided with an injection unit 20 including a cylinder 21 and a screw 22 that is inserted into the cylinder 21, and a mold 10 having a cavity 12.

The injection molding method according to the present embodiment includes
a step of melting the resin composition for injection molding according to the present embodiment in the cylinder 21 and a step of injecting the melted resin composition using the screw 22 to fill the cavity 12.

The injection molding apparatus 1 is provided with the mold 10 that is provided with a molding space (cavity 12) such as a gate, a runner, and a gate, and an injection unit 20 for performing injection molding. The injection unit 20 is provided with, for example, a cylinder 21, a screw 22 that is rotatable in the cylinder 21, a hopper 23 into which a resin composition for injection molding can be charged in the cylinder 21, a heater 24 that heats a phenol resin composition through the cylinder 21, and a nozzle 25 for feeding the molding material kneaded in the cylinder 21 to the mold 10. The screw 22 includes a check valve 26 at the tip end thereof.

In the injection molding method of the present embodiment, first, the resin composition for injection molding is charged into the injection unit 20 being heated. As a result, the resin composition for injection molding is kneaded by the screw 22 while being heated and melted by the heater 24 in the cylinder 21. A temperature T of the tip end of the screw 22 in the cylinder 21 is 60°C to 100°C.

In the present embodiment, the wax includes the wax (b) having a melting point of higher than the temperature T of the screw tip end and equal to or higher than 80°C, and the wax (a) having a melting point of lower than the temperature T of the screw tip end and lower than 80°C. As a result, the excellent weighing accuracy is achieved while preventing the backflow, and the excellent releasability of a cured product made of the resin composition for injection molding from a mold is achieved, which enables continuous injection molding, leading to the excellent productivity.

The resin composition for injection molding melted by the screw 22 is fed while being compressed and kneaded to be directed to the nozzle 25, and the screw 22 moves backward (opposite to the nozzle 25). In this case, a back pressure for pushing the screw 22 from the rear side can be applied to the resin composition for injection molding collected in the nozzle 25 to put the pressure on the resin composition for injection molding. The resin composition for injection molding collected in the nozzle 25 is weighed from the tip end of the screw 22 to a set position. The resin composition for injection molding according to the present embodiment can be prevented from being attached and hardened to the screw or the like to achieve the accurate weighing.

The weighed resin composition for injection molding is fed forward by the screw 22 which has moved backward, and is injected into the cavity 12 of the mold 10 through the nozzle 25 by the pressure of the screw 22. The resin composition for injection molding according to the present embodiment has excellent moldability, and the backflow of the resin composition for injection molding in the cylinder into the hopper during injection is prevented.

The resin composition for injection molding according to the present embodiment has the excellent moldability at a low temperature, and the temperature in the cavity 12 can be set to 150°C to 160°C.

The resin composition for injection molding is cured in the cavity 12, and the mold 10 is then opened to take out a molded article from the cavity 12. The resin composition for injection molding, including the wax (a) and the wax (b) of the present embodiment, has excellent releasability.

In the present embodiment, it is possible to provide an in-vehicle electronic control unit or the like encapsulated with the resin composition for injection molding.

Hereinafter, an example of the in-vehicle electronic control unit will be described.

### [In-vehicle Electronic Control Unit]

The in-vehicle electronic control unit 30 is used to control an engine, various in-vehicle devices, and the like. As illustrated in Fig. 2, the in-vehicle electronic control unit 30 is provided with, for example, a wiring board 32, a plurality of electronic components 36 mounted on at least one surface of the wiring board 32, and an encapsulation resin 34 made of the resin composition for injection molding according to the present embodiment, which encapsulates the electronic components 36. The wiring board 32 is provided with a connection terminal 38 for connecting to the outside at least on one side. The in-vehicle electronic control unit 30 according to an example of the present embodiment is electrically connected to a counterpart connector through the connection terminal 38 by fitting the connection terminal 38 and the counterpart connector.

The wiring board 32 is, for example, a wiring board in which circuit wiring is provided on one side of one surface or the other surface opposite to the one surface, or circuit wirings are provided on both sides. As illustrated in Fig. 2, the wiring board 32 has, for example, a flat plate shape. In the present embodiment, an organic board formed of, for example, an organic material such as polyimide can be adopted as the wiring board 32. The wiring board 32 may include, for example, a through-hole 40 which penetrates the wiring board 32 so that one surface is connected to the other surface. In this case, a wiring provided on one surface of the wiring board 32 and a wiring provided on the other surface are electrically connected through a conductor pattern provided in the through-hole 40.

The wiring board 32 includes, for example, a solder resist layer over one surface on which the electronic components 36 are mounted. The solder resist layer can be formed by using a resin composition for forming a solder resist, which is usually used in the field of semiconductor devices. In the present embodiment, for example, a solder resist layer can be provided on one surface and the other surface of the wiring board 32.

The solder resist layer provided on one surface of the wiring board 32 or on both one surface and the other surface is formed of, for example, a resin composition containing a silicone compound. Thus, it is possible to achieve a solder resist layer having excellent surface smoothness.

As illustrated in Fig. 2, the plurality of electronic components 36 are mounted on, for example, each of one surface and the other surface of the wiring board 32. On the other hand, the electronic components 36 may be provided only on one surface of the wiring board 32 and may not be provided on the other surface of the wiring board 32. The electronic components 36 are not particularly limited as long as the electronic components 36 can be mounted on the in-vehicle electronic control unit, and examples thereof include a microcomputer.

The resin composition for injection molding of the present embodiment is molded and cured to encapsulate the electronic components 36 to form the encapsulation resin 34. In the present embodiment, the encapsulation resin 34 is formed to encapsulate the wiring board 32 together with the electronic components 36, for example. In the example illustrated in Fig. 2, the encapsulation resin 34 is provided to encapsulate one surface and the other surface of the wiring board 32, and the electronic components 36 mounted on the wiring board 32. The encapsulation resin 34 is formed to encapsulate, for example, a part or the entire wiring board 32. It is exemplified in Fig. 2 that the encapsulation resin 34 is provided to encapsulate the entirety of the other portion of the wiring board 32 without encapsulating the connection terminal 38 so that the connection terminal 38 is exposed.

In the in-vehicle electronic control unit 30 according to the present embodiment, the wiring board 32 may be mounted on, for example, a metal base. The metal base can function as, for example, a heat sink for dissipating heat generated from the electronic components 36. In the present embodiment, for example, a metal base and the wiring board 32 mounted on the metal base can be integrally encapsulated and molded by the resin composition for injection molding to form the in-vehicle electronic control unit 30. A metal material constituting the metal base is not particularly limited, and examples thereof may include iron, copper, aluminum, and alloys containing one or more kinds of these. The in-vehicle electronic control unit 30 may not include the metal base.

The in-vehicle electronic control unit 30 exemplified in Fig. 2 performs encapsulation molding on the plurality of electronic components 36 with the resin composition for injection molding according to the present embodiment by injection molding.

Specifically, first, the wiring board 32 on which the plurality of electronic components 36 are mounted is disposed in the cavity 12 of the mold 10. The shape of the cavity 12 is appropriately changed to be a shape of the in-vehicle electronic control unit 30. Then, the resin composition for injection molding of the present embodiment is charged into, through the hopper 23, the cylinder 21 having the screw 22 therein, and the resin composition for injection molding is melted at an extruder temperature of equal to or higher than 80°C and equal to or lower than 100°C. The melted resin is moved to the extruder by the screw and injection-charged into the cavity 12 of the mold through a gate to encapsulate the plurality of electronic components 36.

Although the embodiment of the present invention is described above, the embodiment is an example of the present invention, and various configurations other than the above embodiment can be adopted as long as the effects of the present invention are not impaired.

### Example

Hereinafter, the present invention will be described in more detail with examples, but the present invention is not limited thereto.

### [Comparative Examples 1 to 4 and Examples 1 to 4]

For each of Examples 1 to 4 and Comparative Examples 1 to 4, resin compositions for injection molding were prepared as follows.

First, according to formulations illustrated in Table 1, each component was premixed for 20 minutes with a Henschel mixer (capacity of 200 liters, rotation speed of 900 rpm) set in a room temperature state. Next, the obtained mixture was finely pulverized while keeping a material temperature at equal to or lower than 30°C with a material supply amount of 200 kg/hr, by using a continuous rotary ball mill (dynamic mill MYD25 manufactured by NIPPON COKE AND ENGINEERING. CO., LTD., screw rotation speed of 500 rpm, alumina ball diameter of 10 mm, ball volume filling ratio of 50% with respect to device volume). The finely pulverized mixture was then kneaded using two rolls of 10 inches. The roll temperature was set to 105°C and 15°C, and kneaded. A kneading time was set to 5 minutes. Then, the mixture after kneading was cooled and pulverized to obtain a resin composition for injection molding. Each step from premixing by a Henschel mixer to obtaining the resin composition for injection molding was continuously performed. The details of each component in Table 1 are as follows. The unit in Table 1 is % by weight.

In Examples, the following components were used.

Inorganic Filler
· Silica 1: Fused spherical silica (FB-105, manufactured by Denka Company Limited., average particle diameter 10.6 µm, specific surface area 5.1 m²/g, upper limit cut 71 µm)
· Silica 2: Fused spherical silica (SC-2500-SQ, manufactured by ADMATECHS COMPANY LIMITED, average particle diameter 0.6 um)
· Silica 3: Pulverized silica (RD-8, manufactured by TATSUMORI LTD., average particle diameter 15 um)

Coupling Agent
· Coupling agent 1: N-phenyl-3-aminopropyltrimethoxysilane (KBM-573, manufactured by Shin-Etsu Chemical Co., Ltd.)
· Coupling agent 2: 3-Mercaptopropyltrimethoxysilane (S810, manufactured by Chisso Corporation)
· Coupling agent 3: 3-Glicydoxypropyltrimethoxysilane (S510, manufactured by Chisso Corporation)

Thermosetting Resin
· Epoxy resin 1: Cresol novolac type epoxy resin (EOCN-1020-55, manufactured by Nippon Kayaku Co., Ltd., softening point 55°C, equivalent 196 g/eq, number-average molecular weight 490)
· Epoxy resin 2: Cresol novolac type epoxy resin (EOCN-1020-65, manufactured by Nippon Kayaku Co., Ltd., softening point 65°C, equivalent 199 g/eq, number-average molecular weight 614)
· Epoxy resin 3: Cresol novolac type epoxy resin (EPICRON N680, manufactured by DIC Corporation, softening point 85°C, equivalent 211 g/eq)
· Epoxy resin 4: Bisphenol A type epoxy resin (JER1001, manufactured by Mitsubishi Chemical Group Corporation, softening point 64°C, equivalent 450 to 500 g/eq, number-average molecular weight 900)

Curing Agent
· Curing agent 1: Novolac-type phenol resin (PR-HF-3, manufactured by Sumitomo Bakelite Co., Ltd., softening point 80°C, equivalent 105 g/eq, number-average molecular weight 392, weight-average molecular weight 667)
· Curing agent 2: Novolac-type phenol resin (PR-51470, manufactured by Sumitomo Bakelite Co., Ltd., softening point 110°C, equivalent 103 g/eq, number-average molecular weight 617, weight-average molecular weight 2201)

Curing Catalyst
· Curing catalyst 1: 2-Phenylimidazole (2PZ-PW, manufactured by SHIKOKU KASEI HOLDINGS CORPORATION)

Wax
· Wax 1: Oxidized polyethylene wax (Licowax PED191, manufactured by Clariant Japan K.K., melting point 120°C to 125°C)
· Wax 2: Carnauba wax (Nikko Carnauba, manufactured by NIKKO CHEMICALS Co., Ltd., melting point 80°C to 86°C)
· Wax 3: Stearic acid (SR-Sakura, manufactured by NOF CORPORATION, melting point 59°C to 61°C)

Colorant
· Colorant 1: Carbon black (#5, manufactured by Mitsubishi Chemical Group Corporation)

### (Backflow/Weighing Torque Stability)

The weighing and injection with an electric horizontal injection molding machine 100t were repeated 20 times under the following conditions. The results were evaluated as "O" in a case where no backflow occurred and as "×" in a case where the backflow occurred.

### · Conditions

Screw temperature control (80°C/20°C/20°C in order from the tip end)
Back pressure: 1 MPa
Screw rotation speed: 10 rpm
Injection rate: 10 mm/sec

The weighing was 62 mm, the VP switching position was 5 mm, and the holding pressure 10 MPa.

In addition, the weighing torque stability was evaluated as: weighing torque curve represents the same behavior and value for 20 shots is evaluated as O, and when the values varies is evaluated as ×.

### (Releasability (Resin Residue in Mold))

Under the above described conditions, 20 shot molding was performed with the mold using an ISO test piece. O indicates that 20 shot molding was capable, and × indicates that the resin residue was attached to a stationary side mold or indicates that non-filling occurred.

In this case, the mold temperature was set to 160°C, and the curing time was set to 80 seconds.

### (Spiral Flow)

A resin composition for injection molding was injected into a mold for measuring spiral flow according to ANSI/ASTM D 3123-72 using a low-pressure transfer molding machine (KTS-15 manufactured by Kohtaki Corporation), under the conditions of a mold temperature of 175°C, an injection pressure of 6.9 MPa, and a pressure holding time of 120 seconds, and the flow length was measured.

The spiral flow is a parameter of fluidity, and the larger the value, the better the fluidity.

### (NGFP)

The rectangular flow channel pressure (rectangular pressure) of the resin composition for injection molding obtained in each example was measured as follows.

First, the resin composition for injection molding (powdered product) was preheated by heating at 175°C for 3 seconds in a plunger (plunger size ϕ18 mm) and softened.

Using a low-pressure transfer molding machine (40 t manual press, manufactured by NEC Corporation), the softened resin composition for injection molding obtained above was injected into a rectangular flow channel having a width of 13 mm, a thickness of 0.5 mm, and a length of 175 mm under the conditions of a mold temperature of 175°C and an injection rate of 24.7 mm/sec. At this time, a change in pressure over time was measured by a pressure sensor buried at a position of 25 mm from the upstream tip end of the flow channel, and the minimum pressure (kgf/cm²) during the flow of the resin composition for injection molding was measured, and this was defined as a rectangular pressure. The rectangular pressure is a parameter of the melt viscosity, and a smaller value implies lower melt viscosity.

### (Glass Transition Temperature (Tg))

A bending test piece of JIS6911 was molded at 175°C for 3 minutes, TMA measurement in a flow direction was performed, and a bending point was defined as Tg. The measurement was performed at a temperature increasing rate of 5°C/min. It is considered that the higher the Tg after the molding (without curing), the shorter the molding cycle.

### [Table 1]

**Table 1**

| | | | | Comparative Example 1 | Comparative Example 2 | Comparative Example 3 | Comparative Example 4 |
|---|---|---|---|---|---|---|---|
| Inorganic filler | Silica 1 | | | 20.00 | 72.70 | 72.70 | 72.70 |
| | Silica 2 | | | | 10.00 | 10.00 | 10.00 |
| | Silica 3 | | | 62.70 | | | |
| Coupling agent | Coupling agent 1 | | | 0.10 | 0.10 | 0.10 | 0.10 |
| | Coupling agent 2 | | | 0.10 | 0.10 | 0.10 | 0.10 |
| | Coupling agent 3 | | | 0.20 | 0.20 | 0.20 | 0.20 |
| Thermosetting resin | Epoxy resin 1 | Softening point 55°C | | 11.23 | 11.23 | 11.23 | 6.17 |
| | Epoxy resin 2 | Softening point 65°C | | | | | |
| | Epoxy resin 3 | Softening point 85°C | | | | | |
| | Epoxy resin 4 | Softening point 64°C | | | | | 6.17 |
| Curing agent | Curing agent 1 | Softening point 80°C | Parts by mass | 4.78 | 4.78 | | 3.67 |
| | Curing agent 2 | Softening point 110°C | | | | 4.78 | |
| Curing catalyst | Curing catalyst 1 | | | 0.14 | 0.14 | 0.14 | 0.14 |
| Wax | Wax 1 | Melting point 120°C to 125°C | | 0.15 | 0.15 | 0.15 | 0.15 |
| | Wax 2 | Melting point 80°C to 86°C | | 0.30 | 0.30 | 0.30 | 0.30 |
| | Wax 3 | Melting point 59°C to 61°C | | | | | |
| Colorant | Colorant 1 | | Parts by mass | 0.30 | 0.30 | 0.30 | 0.30 |
| Total | | | | 100.00 | 100.00 | 100.00 | 100.00 |
| Backflow | | | | × | × | × | ○ |
| Weighing torque stability | | | | × | × | × | × |
| Releasability (resin residue in mold) | | | | × | × | × | × |
| Spiral flow | | | mm | 64 | 150 | 130 | 145 |
| Tg (TMA) | | | °C | 150 | 150 | 150 | 130 |
| Rectangular flow channel pressure (minimum) | | | kgf/cm2 | 7.7 | 1.6 | ~3 | 2.8 |

**Table 1 (Continued)**

| | | | | Example 1 | Example 2 | Example 3 | Example 4 |
|---|---|---|---|---|---|---|---|
| Inorganic filler | Silica 1 | | | 72.70 | 72.70 | 72.70 | 72.70 |
| | Silica 2 | | | 10.00 | 10.00 | 10.00 | 10.00 |
| | Silica 3 | | | | | | |
| Coupling agent | Coupling agent 1 | | | 0.10 | 0.10 | 0.10 | 0.10 |
| | Coupling agent 2 | | | 0.10 | 0.10 | 0.10 | 0.10 |
| | Coupling agent 3 | | | 0.20 | 0.20 | 0.20 | 0.20 |
| Thermosetting resin | Epoxy resin 1 | Softening point 55°C | | | 6.26 | 6.15 | |
| | Epoxy resin 2 | Softening point 65°C | | | | | 11.32 |
| | Epoxy resin 3 | Softening point 85°C | | 11.32 | | | |
| | Epoxy resin 4 | Softening point 64°C | | | 6.25 | 6.15 | |
| Curing agent | Curing agent 1 | Softening point 80°C | Parts by mass | | 3.74 | 3.66 | 4.64 |
| | Curing agent 2 | Softening point 110°C | | 4.64 | | | 10 |
| Curing catalyst | Curing | catalyst 1 | | 0.14 | 0.14 | 0.14 | 0.14 |
| Wax | Wax 1 | Melting point 120°C to 125°C | | | | | |
| | Wax 2 | Melting point 80°C to 86°C | | 0.30 | | 0.30 | 0.30 |
| | Wax 3 | Melting point 59°C to 61°C | | 0.20 | 0.20 | 0.20 | 0.20 15 |
| Colorant | Colorant 1 | | Parts by mass | 0.30 | 0.30 | 0.30 | 0.30 |
| Total | | | | 100.00 | 100.00 | 100.00 | 100.00 |
| Backflow | | | | ○ | ○ | ○ | ○ |
| Weighing torque stability | | | | ○ | ○ | ○ | ○ |
| Releasability (resin residue in mold) | | | | ○ | × | ○ | ○ |
| Spiral flow | | | mm | 70 | 150 | 150 | 150 |
| Tg (TMA) | | | °C | 175 | 130 | 130 | 160 |
| Rectangular flow channel pressure (minimum) | | | kgf/cm2 | 8.9 | 1.9 | 1.6 | 1.5 |

As illustrated in Table 1, the resin compositions for injection molding of Examples containing a wax having a melting point of lower than 80°C were excellent in moldability because the excellent weighing accuracy was achieved while preventing the backflow. Furthermore, as in Examples 1, 3, and 4, the releasability was more excellent due to the use of the wax having a melting point of lower than 80°C and the wax having a melting point higher than the wax having a melting point of lower than 80°C in combination.

In addition, as in Examples 2 to 4, by containing the epoxy resin or the curing agent having a softening point of lower than 80°C, the rectangular pressure was small and the melt viscosity was low. Therefore, a low-viscosity resin composition for injection molding was obtained, which enables continuous injection molding, leading to excellent productivity.

The present application claims priority on the basis of Japanese Patent Application No. 2022-017406 filed on February 7, 2022, the entire disclosure of which is incorporated herein by reference.

### REFERENCE SIGNS LIST

- 1: injection molding apparatus
- 10: mold
- 12: cavity
- 20: injection unit
- 21: cylinder
- 22: screw
- 23: hopper
- 24: heater
- 25: nozzle
- 26: check valve
- 30: in-vehicle electronic control unit
- 32: wiring board
- 34: encapsulation resin
- 36: electronic component
- 38: connection terminal
- 40: through-hole

## Claims

1. A resin composition for injection molding, comprising:
at least one kind of a wax (a) having a melting point of lower than 80°C.

2. The resin composition for injection molding according to Claim 1,
wherein the wax (a) includes a wax that has a melting point of equal to or lower than 65°C.

3. The resin composition for injection molding according to Claim 1 or 2, further comprising:
at least one kind of a wax (b) having a melting point equal to or higher than the melting point of the wax (a).

4. The resin composition for injection molding according to any one of Claims 1 to 3,
wherein the resin composition is used in an injection molding apparatus,
the injection molding apparatus being provided with an injection unit composed of a cylinder and a screw that is inserted into the cylinder, and a mold that has a cavity with which a melted composition is filled from the injection unit,
a temperature T of a tip end of the screw in the cylinder is 60°C to 100°C, and
the wax includes a wax (b) that has a melting point of higher than the temperature T of the tip end of the screw and a wax (a) that has a melting point of lower than the temperature T of the tip end of the screw.

5. The resin composition for injection molding according to Claim 4,
wherein a temperature in the cavity is 150°C to 160°C.

6. The resin composition for injection molding according to any one of Claims 1 to 5, further comprising:
an epoxy resin that has a softening point of lower than 80°C, or a curing agent that has a softening point of lower than 80°C.

7. An injection molding method using an injection molding apparatus provided with an injection unit composed of a cylinder and a screw that is inserted into the cylinder, and a mold that has a cavity, the method comprising:
a step of melting the resin composition for injection molding according to any one of Claims 1 to 6 in the cylinder; and
a step of injecting the melted resin composition using the screw to fill the cavity.

8. The injection molding method according to Claim 7,
wherein a temperature T of a tip end of the screw in the cylinder is 60°C to 100°C.

9. The injection molding method according to Claim 7 or 8,
wherein a temperature in the cavity is 150°C to 160°C.
